(19) Europäisches Patentamt
European Patent Office
Office européen des brevets

(11) **EP 3 395 682 B1**

(12) **FASCICULE DE BREVET EUROPEEN**

(45) Date de publication et mention
de la délivrance du brevet:
**07.08.2019 Bulletin 2019/32**

(51) Int Cl.:
**B64C 27/57** *(2006.01)* **G05D 1/08** *(2006.01)*

(21) Numéro de dépôt: **18163876.8**

(22) Date de dépôt: **26.03.2018**

(54) **DISPOSITIF DE REGULATION D'UNE CONSIGNE D'UNE VITESSE DE ROTATION D'UN ROTOR DE GIRAVION, GIRAVION EQUIPE D'UN TEL DISPOSITIF ET METHODE DE REGULATION ASSOCIEE**

VORRICHTUNG ZUR REGULIERUNG EINER DREHGESCHWINDIGKEITSEINSTELLUNG EINES ROTORS EINES DREHFLÜGELFLUGZEUGS, MIT EINER SOLCHEN VORRICHTUNG AUSGERÜSTETES DREHFLÜGELFLUGZEUG UND ENTSPRECHENDE REGULIERUNGSMETHODE

A DEVICE FOR REGULATING A SETPOINT FOR A SPEED OF ROTATION OF A ROTORCRAFT ROTOR, A ROTORCRAFT FITTED WITH SUCH A DEVICE, AND AN ASSOCIATED METHOD OF REGULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2017 FR 1770434**

(43) Date de publication de la demande:
**31.10.2018 Bulletin 2018/44**

(73) Titulaire: **Airbus Helicopters**
**13725 Marignane Cedex (FR)**

(72) Inventeurs:
• **TAHERI, Setareh**
**13100 AIX EN PROVENCE (FR)**
• **CERTAIN, Nicolas**
**13090 AIX EN PROVENCE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 945 841**     **JP-A- H0 539 094**
**US-A1- 2014 246 541**

**Description**

La présente invention concerne un dispositif de régulation d'une consigne d'une vitesse de rotation, dite vitesse NR, d'au moins un rotor principal d'un giravion. Une telle vitesse NR est ainsi directement fonction de la quantité de carburant injectée dans le (ou les) moteur(s) pour produire une combustion destinée à entrainer en rotation le rotor principal.

Ainsi, la présente invention est également du domaine des méthodes de régulation du fonctionnement d'un ou des moteurs d'un groupe de motorisation équipant un giravion. Un tel groupe de motorisation comprend par exemple au moins un moteur principal à combustion, tel un turbomoteur notamment, fournissant classiquement au giravion la puissance mécanique nécessaire pour procurer au moins l'entraînement d'un ou de plusieurs rotors équipant le giravion.

Par suite, la présente invention s'inscrit plus spécifiquement dans le cadre d'un dispositif et d'une méthode de régulation procurant l'entraînement à une vitesse de consigne variable d'au moins un rotor principal du giravion, voire aussi procurant le cas échéant l'entraînement d'un rotor anticouple.

Le rotor principal procure typiquement au moins la sustentation du giravion, voire aussi sa propulsion et/ou son changement d'attitude en vol dans le cas spécifique d'un hélicoptère. Le rotor anticouple procure typiquement une stabilisation et un guidage du giravion en lacet et est couramment formé d'un rotor arrière ou d'au moins une hélice propulsive dans le cas d'un giravion à vitesses élevées d'avancement.

Classiquement, le fonctionnement du (ou des) moteur(s) principal(aux) du giravion est placé sous le contrôle d'une unité de régulation, telle qu'un FADEC (d'après l'acronyme anglais Full Authority Digital Engine Control). L'unité de régulation contrôle le dosage en carburant du (ou des) moteur(s) principal(aux) en fonction d'une consigne, ci-après désignée par consigne de la vitesse NR, relative à une vitesse de rotation requise du rotor principal. La consigne de la vitesse NR peut ainsi dans certains cas particuliers être générée par l'unité de régulation (FADEC). Dans d'autres cas particuliers où par exemple la consigne de la vitesse NR est variable, la consigne de la vitesse NR peut être générée par l'ensemble des équipements électroniques, électriques et informatiques du giravion puis transmise à l'unité de régulation (FADEC) par des moyens de gestion, tels un AFCS (d'après l'acronyme anglais Automatic Flight Control System). Dans ce cas, l'unité de régulation (FADEC) permet d'effectuer une régulation de la consigne de la vitesse NR.

Ainsi, la consigne de la vitesse NR peut être transmise par les moyens de gestion (AFCS) en fonction des besoins en puissance mécanique du giravion identifiés selon le cas de vol courant du giravion, et notamment en fonction des besoins en puissance mécanique pour entraîner le rotor principal. La puissance consommée par le rotor principal peut être par exemple identifiée à partir d'une évaluation d'une part du couple résistant que le rotor principal oppose à l'encontre de son entraînement par le groupe de motorisation et d'autre part de sa vitesse de rotation.

Cependant, l'évolution des techniques dans le domaine des giravions tend à favoriser un entraînement du rotor principal à une vitesse de rotation NR commandée variable par rapport à la vitesse nominale NRnom prédéfinie selon les conditions les plus critiques pour le giravion correspondant par exemple à des procédures complexes de décollage ou d'atterrissage ponctuelles couramment désignées par l'expression de "procédures CAT A".

En effet, une telle variation significative de la vitesse NR d'entraînement du rotor principal est exploitée pour optimiser le niveau de puissance fourni par le (ou les) moteur(s) en fonction de la phase de vol associée, par exemple pour réduire les nuisances sonores à proximité du sol et/ou améliorer les performances. A titre indicatif, la vitesse de rotation du rotor principal peut être commandée variable entre 5% et 10% de la vitesse nominale de rotation NRnom, voire potentiellement davantage selon l'évolution des techniques, et plus particulièrement peut être commandée variable selon une plage de valeurs potentiellement comprise entre 90% et 115% de la vitesse nominale NRnom.

On pourra à ce propos se reporter par exemple à la publication « Enhanced energy maneuverability for attack helicopters using continuous variable rotor speed control » (C.G. SCHAEFER Jr ; F.H. LUTZE, Jr ; 47th forum American Helicopter Society 1991 ; p. 1293-1303). Selon ce document, les performances d'un giravion en situation de combat sont améliorées en faisant varier la vitesse d'entraînement du rotor principal selon une variation de la vitesse air du giravion.

On pourra aussi se reporter par exemple au document US 6 198 991 (YAMAKAWA et al.), qui propose de réduire les nuisances sonores générées par un giravion en approche d'un point de posé en faisant varier la vitesse de rotation du rotor principal.

On pourra encore à ce propos se reporter par exemple au document US2007/118254 (BARNES G.W. et al.), qui propose de faire varier la vitesse de rotation du rotor principal d'un giravion, selon deux valeurs considérées comme basse et haute, sous conditions prédéfinies de seuils de valeurs de divers paramètres liés à des conditions de vol du giravion préalablement identifiées.

Par exemple encore, on pourra aussi se reporter à ce propos au document WO2010/143051 (AGUSTA SPA et al.), qui propose de faire varier la vitesse de rotation d'un rotor principal équipant un giravion conformément à une cartographie préalablement établie selon diverses conditions de vol du giravion.

Enfin, il est également connu, tel que décrit par le Demandeur dans les documents FR 3 000 465, FR 3 000 466 et FR 3 002 803 ainsi que des documents JP H05 39094 et EP 0 945 841 d'utiliser un altimètre pour commander automatiquement une variation de la vitesse de rotation d'un rotor dans une plage comprise entre 90% et 110% d'une valeur nominale prédéterminée.

Par ailleurs, les documents FR 2 974 564, GB 2 192 163 et FR 2 981 045 décrivent quant à eux d'autres dispositifs ou méthodes de régulation d'un rotor principal ou rotor arrière pour giravion.

Cependant, si de tels documents décrivent des dispositifs ou des méthodes de régulation de la vitesse NR lors du vol d'un giravion, de tels documents n'apportent aucune solution permettant de réaliser une régulation automatique de la consigne de commande de la vitesse NR en fonction de la composante verticale Vz de la vitesse de déplacement, en valeur absolue, du giravion par rapport à un niveau de référence qui peut être le sol terrestre ou encore une étendue d'eau tel un océan ou une mer notamment. Ainsi, ces documents ne décrivent aucune solution permettant de réguler automatiquement la consigne de commande de la vitesse NR lors des phases de vol en palier d'un tel giravion à une élévation verticale supérieure à 152,4 mètres (500 pieds) par rapport à ce niveau de référence.

La présente invention a alors pour objet de proposer un dispositif permettant de s'affranchir des limitations mentionnées ci-dessus. En particulier, un but du dispositif ou de la méthode de régulation conforme à l'invention est donc de permettre une régulation automatique de la consigne de commande de la vitesse de rotation NR d'un rotor d'un giravion lors de ses évolutions à faible composante verticale Vz de la vitesse de déplacement lors d'une mission à une élévation verticale comprise par exemple entre 152, 4 et 609,6 mètres (500 et 2000 pieds) par rapport à un niveau de référence. Une telle régulation automatique de la consigne de commande de la vitesse de rotation NR en vol permet ainsi notamment d'améliorer les performances d'un giravion volant à une élévation verticale sensiblement constante supérieure à un seuil prédéterminé de 149,962 mètres (492 pieds) par exemple par rapport au niveau de référence considéré.

En outre, et pour la suite de la demande, on entend décrire par l'expression "élévation verticale" une distance mesurée en pieds, conformément à l'usage du domaine aéronautique, selon une direction sensiblement radiale par rapport au centre de la Terre. Une telle élévation verticale peut donc désigner à la fois une hauteur par rapport au sol ou une étendue d'eau située sous le giravion et une altitude qui mesurée quant à elle par rapport à un niveau de pression atmosphérique de référence.

De même, l'expression "niveau de référence" désigne pour la suite de la demande soit le sol, soit une étendue d'eau située sous le giravion, soit encore le niveau de la mer ou un niveau correspondant à une pression atmosphérique de référence.

L'invention concerne donc un dispositif de régulation d'une consigne de commande d'une vitesse de rotation, dite vitesse NR, d'au moins un rotor principal d'un giravion, le dispositif de régulation équipant un tel giravion comportant :

- au moins un organe de mesure pour effectuer des mesures représentatives d'une élévation verticale z, z', z" courante du giravion par rapport à un niveau de référence, et
- des moyens de mesure d'une vitesse de déplacement du giravion permettant de mesurer au moins une composante verticale Vz d'une vitesse de déplacement du giravion par rapport à l'air environnant le giravion.

En outre, un tel dispositif de régulation de la consigne de commande de la vitesse NR comporte des moyens de gestion pour commander automatiquement la consigne de commande de la vitesse NR selon au moins deux lois de commande prédéterminées NR1, NR2 distinctes l'une de l'autre, ces au moins deux lois de commande prédéterminées NR1, NR2 étant alternativement sélectionnées lors d'une phase de vol en descente du giravion au moins en fonction des mesures représentatives de l'élévation verticale z, z', z" évoluant de façon décroissante, les moyens de gestion permettant de commander la consigne de commande de la vitesse NR selon :

- une première loi de commande NR1 lorsque l'élévation verticale z, z', z" est inférieure à une première valeur de seuil prédéterminée S1,
- une deuxième loi de commande NR2 choisie distincte de la première loi de commande NR1 lorsque l'élévation verticale z, z', z" est supérieure à une seconde valeur de seuil prédéterminée S2 supérieure à la première valeur de seuil prédéterminée S1.

Selon l'invention, un tel dispositif de régulation est remarquable en ce que la première valeur de seuil prédéterminée S1 est variable en fonction de la composante verticale Vz et telle que :

- la première valeur de seuil prédéterminée S1 est inférieure ou égale à une première constante d'élévation verticale Sc1 lorsque la composante verticale Vz est supérieure ou égale à une constante de vitesse verticale Vzc, et
- la première valeur de seuil prédéterminée S1 est supérieure à la première constante d'élévation verticale Sc1 lorsque la composante verticale Vz est inférieure à la constante de vitesse verticale Vzc.

Autrement dit, un tel dispositif de régulation de la vitesse NR permet alors d'adapter automatiquement la première valeur de seuil prédéterminée S1 en fonction de la composante verticale Vz de vitesse de déplacement du giravion par rapport à l'air environnant. En outre, puisque le giravion évolue lors d'une phase de vol en descente, une telle composante verticale Vz peut se présenter sous la forme d'une valeur algébrique négative.

Une telle adaptation permet alors d'améliorer la performance du giravion sur lequel ce dispositif est installé en conservant la deuxième loi de commande NR2, privilégiant les performances du giravion, notamment lors d'un vol en palier à par exemple une élévation verticale comprise entre 152, 4 et 609,6 mètres (500 et 2000 pieds) par rapport au niveau de référence.

La première loi de commande NR1 peut ainsi permettre par exemple d'abaisser la consigne de commande de la vitesse de rotation NR à un niveau inférieur à une valeur nominale, par exemple égale à 94% de la valeur nominale, lorsque l'élévation verticale z, z', z" courante du giravion par rapport au niveau de référence est inférieure à la première valeur de seuil prédéterminée S1. Cette première loi de commande NR1, également désignée par loi de commande acoustique, permet alors de limiter, en fonction de la vitesse d'avancement du giravion, son empreinte acoustique sur le milieu environnant.

Inversement, la seconde loi de commande NR2 peut permettre d'augmenter la consigne de commande de la vitesse de rotation NR à un niveau supérieur ou égal à une valeur nominale, au moins lorsque l'élévation verticale z, z', z" courante du giravion par rapport au niveau de référence est supérieure à une seconde valeur de seuil prédéterminée S2 supérieure à la première valeur de seuil prédéterminée S1. Dans ce cas, seule la première loi de commande NR1 permet de répondre à des exigences de réduction de niveau acoustique en fonction de l'élévation verticale z, z', z" et d'une vitesse d'avancement du giravion suivant une direction sensiblement horizontale.

Ainsi, la première loi de commande NR1 pourra être la loi de commande mise en oeuvre par défaut à basse élévation verticale car elle permet, selon le cas de vol du giravion, d'en limiter son empreinte acoustique sur le milieu extérieur. Cependant, une telle première loi de commande NR1 aura pour effet de limiter les performances de vol d'un giravion.

La seconde loi de commande NR2 ne peut quant à elle être mise en oeuvre par défaut à basse élévation verticale et pourra être mise en oeuvre automatiquement lors de missions du giravion à moyenne ou haute élévation verticale. Une telle seconde loi de commande NR2 permet de garantir les performances de vol de l'aéronef dans un domaine d'élévation verticale où l'empreinte acoustique du giravion n'est plus problématique pour son environnement immédiat.

Par ailleurs, les moyens de mesure permettant de mesurer la composante verticale Vz de la vitesse du giravion par rapport à l'air peuvent notamment comprendre un anémomètre unidirectionnel ou encore un anémomètre omnidirectionnel pour mesurer une vitesse relative du vent par rapport au fuselage du giravion.

Comme déjà évoqué, les moyens de gestion peuvent quant à eux consister en l'AFCS (d'après l'acronyme anglais Automatic Flight Control System) du giravion.

Avantageusement, la constante de vitesse verticale Vzc peut être choisie voisine de zéro, la première valeur de seuil prédéterminée S1 étant inférieure ou égale à une première constante d'élévation verticale Sc1 lorsque la composante verticale Vz est voisine de zéro et la première valeur de seuil prédéterminée S1 est supérieure à la première constante d'élévation verticale Sc1 lorsque la composante verticale Vz est inférieure à -2,032 mètres/seconde (-400 pieds/minute).

En d'autres termes, lorsque le giravion effectue un vol en palier selon une direction sensiblement horizontale, la première valeur de seuil prédéterminée S1 est inférieure ou égale à la première constante d'élévation verticale Sc1.

En pratique, la seconde valeur de seuil prédéterminée S2 peut être la somme de la première valeur de seuil prédéterminée S1 et d'une seconde constante d'élévation verticale Sc2.

Cette seconde constante d'élévation verticale Sc2 est alors choisie suffisamment grande pour que la seconde valeur de seuil prédéterminée S2 soit distincte et supérieure à la première valeur de seuil prédéterminée S1.

Selon une caractéristique avantageuse de l'invention, la première constante d'élévation verticale Sc1 peut être comprise entre 121,92 et 182,88 mètres (400 et 600 pieds) par rapport au niveau de référence et préférentiellement égale à 149,962 mètres (492 pieds) par rapport au niveau de référence.

Une telle valeur de la première constante d'élévation verticale Sc1 permet ainsi de garantir une performance optimale du giravion à une élévation verticale supérieure à 149,962 mètres (492 pieds) par rapport au niveau de référence en ne réduisant pas inutilement la consigne de vitesse NR lorsque le giravion effectue une trajectoire de vol en palier.

Avantageusement, la seconde constante d'élévation verticale Sc2 peut quant à elle être comprise entre 91,44 et 152,4 mètres (300 et 500 pieds) et être préférentiellement égale à 121,92 mètres (400 pieds).

Cette valeur de la seconde constante d'élévation verticale Sc2 permet alors de garantir une performance optimale du giravion à une élévation verticale supérieure à 271,882 mètres (892 pieds) par rapport au niveau de référence en ne réduisant pas inutilement la consigne de vitesse NR lorsque le giravion vole au dessus de cette élévation verticale et ce, quelle que soit la valeur de la composante verticale Vz de la vitesse de déplacement du giravion. Une telle seconde valeur de seuil prédéterminée S2 égale à 271,882 mètres (892 pieds) par rapport au niveau de référence correspond alors à la somme de la première constante d'élévation verticale Sc1 qui est préférentiellement égale à 149,962 mètres (492 pieds) par rapport au niveau de référence avec la seconde constante d'élévation verticale Sc2 qui est préférentiellement égale à 121,92 mètres (400 pieds).

En pratique, les moyens de gestion peuvent permettre de commander la consigne de commande de la vitesse NR selon une troisième loi de commande NR3 distincte de la première loi de commande NR1 lorsque d'une part la composante verticale Vz est supérieure ou égale à la constante de vitesse verticale Vzc et d'autre part l'élévation verticale z, z', z" est supérieure à la première valeur de seuil prédéterminée S1.

Autrement dit, une telle troisième loi de commande NR3 est mise en oeuvre par les moyens de gestion lors d'une phase de vol sensiblement en palier du giravion à une élévation verticale située au dessus de la première valeur de seuil prédéterminée S1. Un tel agencement permet alors également de ne pas limiter les performances du giravion en ne réduisant pas inutilement la consigne de commande de la vitesse NR lorsque le giravion vole au dessus de cette première valeur de seuil prédéterminée S1 et que la composante verticale Vz de vitesse de déplacement du giravion est faible en étant supérieure ou égale à la constante de vitesse verticale Vzc qui peut être avantageusement nulle.

Selon une caractéristique avantageuse de l'invention, la troisième loi de commande NR3 peut être identique à la deuxième loi de commande NR2.

Dans ce cas, les performances du giravion peuvent être optimales dès que celui-ci évolue à une élévation verticale z, z', z" supérieure à la première valeur de seuil prédéterminée S1.

Avantageusement, les moyens de gestion peuvent permettre de commander la consigne de commande de la vitesse NR selon une quatrième loi de commande NR4 distincte des première et deuxième lois de commande NR1 et NR2 lorsque d'une part la composante verticale Vz est inférieure à la constante de vitesse verticale Vzc et d'autre part l'élévation verticale z, z', z" est comprise entre la première valeur de seuil prédéterminée S1 et la seconde valeur de seuil prédéterminée S2.

Une telle quatrième loi de commande NR4 est alors avantageusement mise en oeuvre par les moyens de gestion de manière à faire évoluer la consigne de commande de la vitesse de rotation NR par exemple entre une valeur haute de départ correspondant à la deuxième loi de commande NR2 et une valeur basse inférieure à la valeur haute, cette valeur basse correspondant à la première loi de commande NR1.

En pratique, la quatrième loi de commande NR4 peut réaliser une transition progressive entre la deuxième loi de commande NR2 et la première loi de commande NR1.

De cette manière, les moyens de gestion mettant en oeuvre la quatrième loi de commande NR4 permettent de ne pas faire varier brutalement la consigne de commande de la vitesse NR. Le pilote du giravion peut alors identifier de manière sensorielle cette variation progressive de la vitesse NR du rotor principal comme étant automatiquement générée par les moyens de gestion et non pas comme étant une variation brutale, signe d'une éventuelle panne moteur.

En outre, l'invention concerne également un giravion comportant :

- au moins un rotor principal entrainé par au moins un moteur,
- au moins un organe de mesure pour effectuer des mesures représentatives d'une élévation verticale z, z', z" courante du giravion par rapport à un niveau de référence,
- des moyens de mesure d'une vitesse de déplacement du giravion permettant de mesurer au moins une composante verticale Vz d'une vitesse de déplacement du giravion par rapport à l'air environnant le giravion, et
- un dispositif de régulation d'une consigne de commande d'une vitesse de rotation, dite vitesse NR, du (ou des) rotor(s) principal(principaux) du giravion, le dispositif de régulation de la consigne de commande de la vitesse NR comportant des moyens de gestion pour commander automatiquement la consigne de commande de la vitesse NR selon au moins deux lois de commande prédéterminées NR1, NR2 distinctes l'une de l'autre, les au moins deux lois de commande prédéterminées NR1, NR2 étant alternativement sélectionnées lors d'une phase de vol en descente du giravion au moins en fonction des mesures représentatives de l'élévation verticale z, z', z" évoluant de façon décroissante par rapport au niveau de référence, les moyens de gestion permettant de commander la consigne de commande de la vitesse NR selon :

  - une première loi de commande NR1 lorsque l'élévation verticale z, z', z" est inférieure à une première valeur de seuil prédéterminée S1,
  - une deuxième loi de commande NR2 choisie distincte de la première loi de commande NR1 lorsque l'élévation verticale z, z', z" est supérieure à une seconde valeur de seuil prédéterminée S2 supérieure à la première valeur de seuil prédéterminée S1.

Un tel giravion est remarquable en ce qu'il comporte un dispositif de régulation de la consigne de commande de la vitesse NR tel que précédemment décrit.

Selon une caractéristique avantageuse de l'invention, le (ou les) organe(s) de mesure peu(ven)t comporter :

- un premier altimètre dit "altimètre barométrique" permettant d'effectuer une mesure d'une pression atmosphérique et de comparer cette mesure avec une pression atmosphérique de référence pour déterminer une altitude barométrique z' du giravion à laquelle est effectuée cette mesure de la pression atmosphérique, et
- un second altimètre dit "radioaltimètre" permettant d'effectuer une mesure d'une hauteur radiosonde z" du giravion par rapport au sol en émettant une onde destinée à être réfléchie par le sol et en mesurant le temps nécessaire à cette onde pour parcourir une distance aller-retour séparant le giravion du sol, et

le giravion peut comporter des moyens de calcul pour calculer une élévation verticale z, dite "radio-hybridée", à partir d'un filtrage de l'altitude barométrique z' et de la hauteur radiosonde z".

L'altimètre barométrique mesure une différence de pression atmosphérique entre le niveau de référence, qui est généralement saisi manuellement par l'équipage du giravion et l'altitude courante de l'altimètre barométrique. Le niveau de référence choisi, correspondant à l'affichage « 0 », dépend donc d'une phase du vol particulière du giravion et est généralement celui de l'aérodrome de départ ou de destination du giravion. Selon d'autres phases de vol, le niveau de référence peut également être choisi comme celui correspondant au niveau de la mer.

L'altimètre barométrique est étalonné suivant la variation de la pression atmosphérique selon l'altitude dans une atmosphère standard, c'est-à-dire normalisée. En prenant le niveau de la mer comme altitude de référence h0, et en prenant pour l'atmosphère un état moyen défini par l'atmosphère normalisée type OACI (Température 15 °C = 288,15 K, pression 1013,25 hPa et un gradient vertical de température 0,65 K pour 100 m), on obtient la formule internationale du nivellement barométrique :

$$p(h) = 1013{,}25 \left( 1 - \frac{0{,}0065 \cdot h}{288{,}15} \right)^{5{,}255} \text{hPa}$$

Cette formule permet le calcul de la pression à une certaine altitude, sans avoir besoin de connaître la température ou le gradient vertical de température. La précision dans le cas d'applications pratiques est toutefois limitée, puisque l'on choisit ici un état moyen différent de l'état réel de l'atmosphère.

Le radioaltimètre, qui est également couramment appelé sonde, radar altimétrique ou encore altimètre radar, est un appareil installé à bord du giravion et est destiné à mesurer sa hauteur par rapport au sol ou la surface de l'eau. En aéronautique c'est un instrument d'aide au pilotage utilisé lors de missions de vol sans visibilité, ou vol aux instruments. Il indique la hauteur de l'aéronef au-dessus du sol et non l'altitude barométrique mesurée par un altimètre simple. La hauteur correspondant au niveau du giravion « 0 » est l'élévation verticale à laquelle le train d'atterrissage du giravion entre en contact avec le sol lors de la phase de vol d'atterrissage.

Une antenne émettrice sur le giravion émet une onde vers le sol, où elle est réfléchie de manière diffuse. Une partie de l'énergie est donc réémise vers le giravion et captée par l'antenne réceptrice, le temps entre l'émission et la réception est la mesure de la distance :

$$\Delta t = \frac{2 \times z''}{C}$$

où :

$\Delta t$ est le temps nécessaire à l'onde pour effectuer un trajet aller-retour entre le giravion et le sol ;
z" est la hauteur radiosonde du giravion par rapport au sol ;
C est la vitesse de la lumière dans le milieu traversé par l'onde.

Afin d'utiliser au mieux les avantages de chacun des premier et second altimètres, les mesures peuvent être réalisées de manière combinée puis elles peuvent être filtrées. Un premier filtre passe-haut peut ainsi être appliqué à la mesure effectuée par l'altimètre barométrique et un second filtre passe-bas peut être appliqué à la mesure effectuée par le radioaltimètre. Ce filtrage des signaux issus de ces deux altimètres permet alors d'obtenir une élévation verticale z dite "radio-hybridée" qui peut être obtenue par calcul à partir de l'équation suivante :

$$z(s) = F(s) \times z'' + [1-F(s)] \times z'$$

Un objectif de ce filtrage est ainsi d'atténuer les composantes hautes fréquences du signal généré par le radioaltimètre, l'expression F(s) désignant un filtre de type passe-bas et l'expression [1-F(s)] désignant un filtre de type passe-haut.

Une telle solution permet alors aux moyens de gestion de ne pas basculer de manière répétée et intempestive de la loi acoustique correspondant à la première loi de commande NR1 à la loi nominale correspondant à la deuxième loi de commande NR2. En effet, sans ce filtrage des composantes hautes fréquences du signal généré par le radioaltimètre, un basculement intempestif pourrait par exemple se produire lors d'un survol d'un terrain accidenté par le giravion évoluant à basse élévation verticale.

Enfin, l'invention concerne également une méthode de régulation de la consigne de commande de la vitesse de rotation, dite vitesse NR, d'au moins un rotor principal d'un giravion, une telle méthode comportant au moins les étapes consistant en :

- une première étape de mesure pour effectuer des mesures représentatives d'une élévation verticale z, z', z" courante du giravion par rapport à un niveau de référence, et
- une deuxième étape de mesure pour mesurer au moins une composante verticale Vz d'une vitesse de déplacement du giravion par rapport à l'air environnant le giravion,

- une étape de gestion pour commander automatiquement la consigne de commande de la vitesse NR selon au moins deux lois de commande prédéterminées NR1, NR2 distinctes l'une de l'autre, les au moins deux lois de commande prédéterminées NR1, NR2 étant alternativement sélectionnées lors d'une phase de vol en descente du giravion au moins en fonction des mesures représentatives de l'élévation verticale z, z', z" évoluant de façon décroissante, l'étape de gestion permettant de commander la consigne de commande de la vitesse NR selon :

  - une première loi de commande NR1 lorsque l'élévation verticale z, z', z" est inférieure à une première valeur de seuil prédéterminée S1,
  - une deuxième loi de commande NR2 choisie distincte de la première loi de commande NR1 lorsque l'élévation verticale z, z', z" est supérieure à une seconde valeur de seuil prédéterminée S2 supérieure à la première valeur de seuil prédéterminée S1.

Selon l'invention, une telle méthode est remarquable en ce que la première valeur de seuil prédéterminée S1 est variable en fonction de la composante verticale Vz et telle que :

- la première valeur de seuil prédéterminée S1 est inférieure ou égale à une première constante d'élévation verticale Sc1 lorsque de la composante verticale Vz est supérieure ou égale à une constante de vitesse verticale Vzc, et
- la première valeur de seuil prédéterminée S1 est supérieure à la première constante d'élévation verticale Sc1 lorsque la composante verticale Vz est inférieure à la constante de vitesse verticale Vzc.

Autrement dit, cette méthode de régulation de la consigne de commande de la vitesse NR permet de modifier la première valeur de seuil prédéterminée S1 pendant une mission du giravion, et ce automatiquement et à tout instant, en fonction de la composante verticale Vz de sa vitesse de déplacement par rapport à l'air environnant le giravion.

Avantageusement, l'étape de gestion peut commander la consigne de commande de la vitesse NR selon une troisième loi de commande NR3 distincte de la première loi de commande NR1 lorsque d'une part la composante verticale Vz est supérieure ou égale à la constante de vitesse verticale Vzc et d'autre part l'élévation verticale z, z', z" est supérieure à la première valeur de seuil prédéterminée S1.

En d'autres termes, l'étape de gestion commande la consigne de commande de la vitesse NR selon la troisième loi de commande NR3 lors d'une phase de vol sensiblement en palier du giravion à une élévation verticale z, z', z" située au dessus de la première valeur de seuil prédéterminée S1. Une telle méthode de régulation permet alors également de ne pas limiter les performances du giravion en ne réduisant pas inutilement la consigne de commande de la vitesse NR lorsque le giravion vole au dessus de cette élévation verticale S1 et que la composante verticale Vz de sa vitesse de déplacement par rapport à l'air environnant est faible en étant supérieure ou égale à la constante de vitesse verticale Vzc qui peut être avantageusement nulle.

En pratique, l'étape de gestion peut commander la consigne de commande de la vitesse NR selon une quatrième loi de commande NR4 distincte des première et deuxième lois de commande NR1 et NR2 lorsque d'une part la composante verticale Vz est inférieure à la constante de vitesse verticale Vzc et d'autre part l'élévation verticale z, z', z" est comprise entre la première valeur de seuil prédéterminée S1 et la seconde valeur de seuil prédéterminée S2.

Ainsi, l'étape de gestion peut commander la consigne de commande de la vitesse NR selon la quatrième loi de commande NR4 de manière à faire évoluer la vitesse de rotation NR en réalisant par exemple une transition progressive entre la première loi de commande NR1 et la deuxième loi de commande NR2 lorsque les mesures représentatives de l'élévation verticale z, z', z" varient de façon croissante. Inversement, la quatrième loi de commande NR4 peut réaliser une transition progressive entre la deuxième loi de commande NR2 et la première loi de commande NR1 lorsque les mesures représentatives de l'élévation verticale z, z', z" varient de façon décroissante.

De cette manière, l'étape de gestion commande la consigne de commande de la vitesse NR selon la quatrième loi de commande NR4 pour ne pas faire varier brutalement la vitesse de rotation NR du rotor principal du giravion. Le pilote du giravion peut alors identifier de manière sensorielle cette variation progressive de la vitesse de rotation NR comme étant automatiquement générée lors de l'étape de gestion de la méthode de régulation et non pas comme étant une variation brutale, signe d'une éventuelle panne moteur.

L'invention et ses avantages apparaîtront avec plus de détails dans le cadre de la description qui suit avec des exemples donnés à titre indicatif mais non limitatif à l'appui des figures annexées dans lesquelles :

- la figure 1 est une représentation schématique en vue de côté d'un giravion conforme à l'invention,

- la figure 2 représente différentes courbes illustrant des lois de commande pour la consigne de commande de la vitesse NR d'un rotor principal de giravion en fonction de la vitesse d'avancement V du giravion suivant une direction sensiblement horizontale, conformément à l'invention,

- la figure 3 représente des courbes illustrant les variations des première et seconde valeurs de seuil prédéterminées S1 et S2 en fonction de la composante verticale Vz de la vitesse de déplacement du giravion par rapport à l'air environnant,

- la figure 4 est une courbe représentant les domaines des différentes lois de commandes pour la consigne de commande de la vitesse NR en fonction de l'élévation verticale z du giravion, et

- la figure 5 est une représentation schématique d'une méthode de régulation conforme à l'invention.

Les éléments présents dans plusieurs figures distinctes sont affectés d'une seule et même référence.

Comme déjà évoqué précédemment, l'invention se rapporte au domaine des giravions comportant au moins un rotor principal permettant de réaliser au moins la sustentation du giravion.

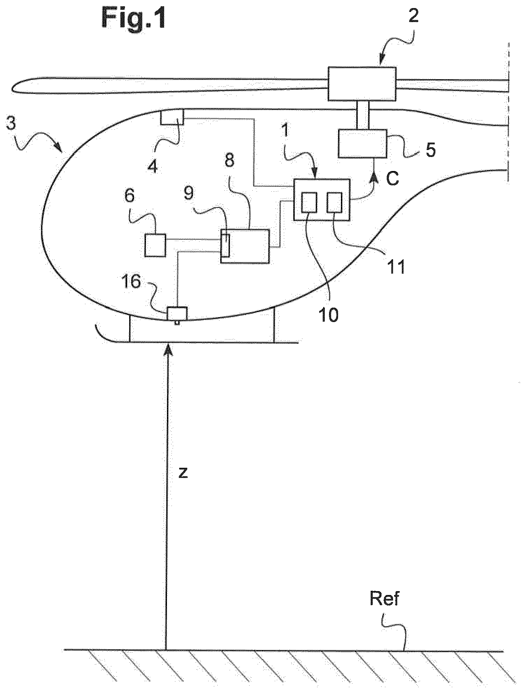

Tel que représenté à la figure 1, un tel giravion 3 comporte un dispositif de régulation 1 d'une consigne de commande d'une vitesse NR de rotation du rotor principal 2. Un tel dispositif de régulation 1 est donc apte à générer et transmettre une consigne de commande C à un moteur 5 entraînant en rotation le rotor principal 2.

Par ailleurs, un tel dispositif de régulation 1 est relié, par exemple électriquement par voie filaire ou par un moyen de communication sans fil, à des moyens de calcul 8. Ces moyens de calcul 8 comportent quant à eux des organes d'entrée 9 pour permettre leur connexion avec au moins un organe de mesure 6, 16 permettant de mesurer une élévation verticale z, z', z" courante du giravion 3 par rapport à un niveau de référence Ref.

De plus, un tel dispositif de régulation 1 peut comporter, des moyens de gestion 10 permettant de commander la consigne de commande de la vitesse NR selon différentes lois de commande prédéterminées NR1, NR2, NR3 et NR4 qui peuvent avantageusement être stockées dans une mémoire 11.

Les moyens de gestion 10 permettent alors de commander la consigne de commande de la vitesse NR selon :

- une première loi de commande NR1 lorsque l'élévation verticale z, z', z" est inférieure à une première valeur de seuil prédéterminée S1,
- une deuxième loi de commande NR2 choisie distincte de la première loi de commande NR1 lorsque l'élévation verticale z, z', z" est supérieure à une seconde valeur de seuil prédéterminée S2 supérieure à la première valeur de seuil prédéterminée S1.

En outre, le giravion 3 peut comporter un premier organe de mesure 6 dit "altimètre barométrique" permettant d'effectuer une mesure d'une pression atmosphérique et de comparer cette mesure avec une pression atmosphérique de référence pour déterminer une altitude barométrique z' du giravion 3 à laquelle est effectuée cette mesure de la pression atmosphérique.

Tel que représenté, le giravion 3 peut comporter également un second organe de mesure 16 dit "radioaltimètre" permettant d'effectuer une mesure d'une hauteur radiosonde z" du giravion 3 par rapport au sol en émettant une onde destinée à être réfléchie par le sol et en mesurant le temps nécessaire à cette onde pour parcourir une distance aller-retour séparant le giravion 3 du sol.

Dans ce cas, les moyens de calcul 8 peuvent alors permettre de calculer une élévation verticale z, dite "radio-hybridée", à partir d'un filtrage de l'altitude barométrique z' et de la hauteur radiosonde z" par rapport au sol.

Par ailleurs, un tel giravion 3 comporte également des moyens de mesure 4 permettant de mesurer une vitesse de déplacement du giravion 3. De tels moyens de mesure 4 peuvent alors être formés par au moins un anémomètre pour mesurer une vitesse relative du vent par rapport au fuselage du giravion 3. Les moyens de mesure 4 génèrent alors au moins des mesures de la valeur de la composante verticale Vz de la vitesse de déplacement du giravion 3 par rapport à l'air environnant.

Le dispositif de régulation 1 est relié à cet organe de mesure 4 et peut alors modifier automatiquement la loi de commande de la vitesse de rotation NR du rotor principal 2 en fonction d'une part de l'élévation verticale z du giravion 3 et d'autre part des mesures de la composante verticale Vz qui sont alors formées par des valeurs algébriques négatives lors d'une phase de descente du giravion 3.

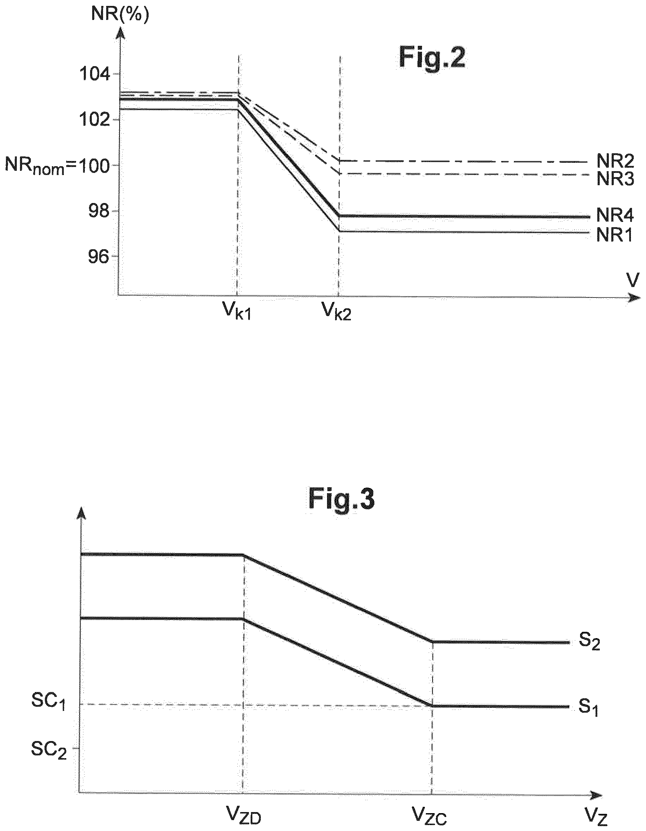

La figure 2 illustre quant à elle les variations des deux lois de commande NR1 et NR2 mais également les variations d'une troisième et d'une quatrième lois de commande NR3 et NR4 en fonction de la vitesse d'avancement V suivant une direction sensiblement horizontale du giravion 3 par rapport au sol.

De façon générale, on remarque à cette figure 2 que lorsque la vitesse d'avancement V augmente, les lois de commande NR1, NR2, NR3 et NR4 peuvent décroître. A faible vitesse d'avancement V, le besoin de puissance motrice est en effet maximal et la vitesse de rotation NR du rotor principal 2 est supérieure à la valeur nominale NRnom correspondant à une valeur de 100%.

A partir d'un seuil de vitesse d'avancement $Vk_1$, il est alors possible de procéder à une réduction de la vitesse de rotation NR du rotor principal 2 vers la valeur NRnom pour conserver une vitesse de rotation nominale suffisante tout en limitant la consommation de carburant du giravion 3 mais sans effet sur les performances de vol du giravion 3. La réduction de la vitesse de rotation NR du rotor principal 2 peut également atteindre des valeurs inférieures à la valeur NRnom pour dans ce cas répondre à des exigences de niveau acoustique en fonction de l'élévation verticale z, z', z" et/ou de la composante verticale Vz de la vitesse de déplacement du giravion 3 par rapport à l'air environnant.

A partir d'un seuil de vitesse d'avancement $Vk_2$, la vitesse de rotation NR du rotor principal 2 peut ensuite se stabiliser vers une valeur proche de la valeur NRnom pour les lois de commande NR2 et NR3 ou inférieure à la valeur NRnom pour les lois de commande NR1 et NR4

Ainsi, les lois de commande NR1 et NR4 peuvent correspondre à des lois permettant de limiter l'empreinte acoustique du giravion 3 et par conséquent elles permettent une réduction de la vitesse de rotation NR du rotor principal 2 en dessous de la valeur NRnom.

Les lois de commande NR2 et NR3 permettent quant à elles de réaliser une réduction de la vitesse de rotation NR du rotor principal 2 en tendant vers la valeur NRnom permettant de favoriser les performances de vol du giravion 3.

Telle que représentée à la figure 3, la première valeur de seuil prédéterminée S1 est variable en fonction de la composante verticale Vz de la vitesse de déplacement du giravion 3 par rapport à l'air environnant. Cette première valeur de seuil prédéterminée S1 est alors ici représentée égale à une constante d'élévation verticale lorsque la composante verticale Vz est inférieure ou égale à une constante de vitesse verticale $Vz_D$. Selon un exemple de réalisation, une telle constante de vitesse verticale $Vz_D$ peut être proche de -5,8 mètres/seconde (-1000 pieds/minute).

La première valeur de seuil prédéterminée S1 est ensuite représentée sous la forme d'une fonction décroissante en fonction de la composante verticale Vz et décroît jusqu'à une première constante d'élévation verticale Sc1 lorsque la composante verticale Vz est égale à une constante de vitesse verticale Vzc. Selon un exemple de réalisation, une telle constante de vitesse verticale Vzc peut être proche de zéro.

La première valeur de seuil prédéterminée S1 décroît donc puis se stabilise pour redevenir une fonction constante à partir de l'instant où la composante verticale Vz devient supérieure à la constante de vitesse verticale $Vz_C$

La seconde valeur de seuil prédéterminée S2 est quant à elle représentée comme étant la somme de la première valeur de seuil prédéterminée S1 et d'une seconde constante d'élévation verticale Sc2.

Ainsi, un tel dispositif de régulation 1 comporte des moyens de gestion 10 permettant de commander automatiquement la vitesse NR selon au moins deux vitesses prédéterminées NR1 et NR2 distinctes l'une de l'autre pour modifier et réduire la vitesse de rotation NR du rotor 2 lorsque la puissance nécessaire n'est pas maximale, c'est-à-dire notamment lors des déplacements au sol du giravion 3.

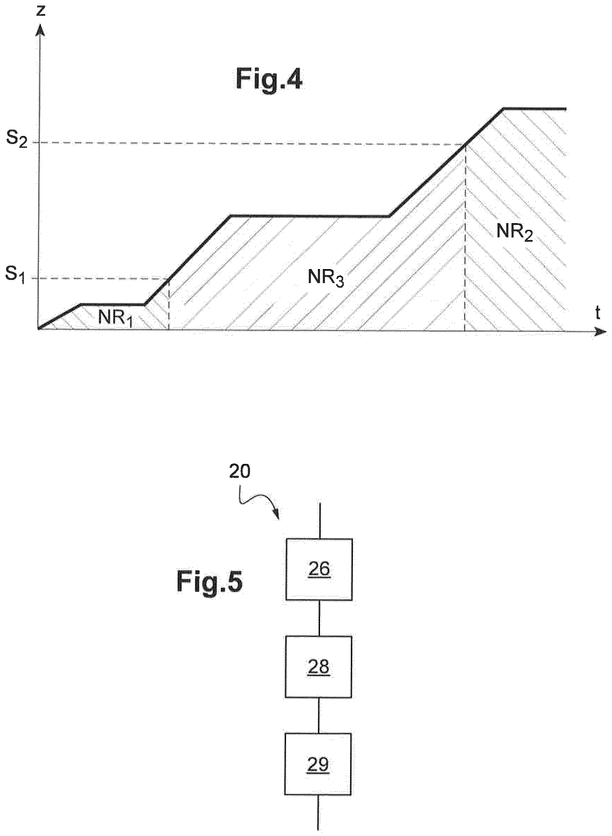

Comme déjà évoqué et tel que représenté à la figure 4, la consigne de commande de la vitesse NR peut être choisie selon différentes lois de commande NR1, NR2 ou NR3. La courbe est ainsi représentative de l'élévation verticale z courante du giravion 3 en fonction du temps par rapport à un niveau de référence. Cette courbe permet alors d'illustrer les domaines correspondants.

En outre, les moyens de gestion 10 permettent de commander la consigne de commande de la vitesse NR selon la troisième loi de commande NR3 distincte de la première loi de commande NR1 lorsque d'une part la composante verticale Vz est supérieure ou égale à la constante de vitesse verticale Vzc et d'autre part l'élévation verticale z est supérieure à la première valeur de seuil prédéterminée S1.

Telle que représentée à la figure 5, l'invention se rapporte également à une méthode de régulation 20 de la consigne de commande de la vitesse NR de rotation du rotor 2 du giravion 3.

Une telle méthode de régulation 20 comporte ainsi au moins une première étape de mesure 26 pour effectuer des mesures représentatives d'une élévation verticale z courante du giravion 3 par rapport au sol.

La méthode de régulation 20 comporte ensuite une deuxième étape de mesure 28 pour mesurer au moins une composante verticale Vz d'une vitesse de déplacement du giravion 3 par rapport à l'air environnant. Cette deuxième étape de mesure 28 est ainsi mise en oeuvre à partir des mesures qui peuvent être réalisées par les moyens de mesure 4 agencés sur le giravion 3.

Enfin, la méthode de régulation 20 comporte une étape de gestion 29 pour commander automatiquement la consigne de commande de la vitesse NR selon au moins deux lois de commande prédéterminées NR1, NR2 distinctes l'une de l'autre. Ces au moins deux lois de commande prédéterminées NR1, NR2 peuvent alors être alternativement sélectionnées au moins en fonction des mesures représentatives de l'élévation verticale z du giravion 3 par rapport à un niveau de référence.

Cette étape de gestion 29 permet donc de commander la consigne de commande de la vitesse NR selon une première loi de commande NR1 lorsque l'élévation verticale z est inférieure à une première valeur de seuil prédéterminée S1 et selon une deuxième loi de commande NR2 lorsque l'élévation verticale z est supérieure à une seconde valeur de seuil prédéterminée S2 supérieure à la première valeur de seuil prédéterminée S1.

Comme déjà évoqué, la première valeur de seuil prédéterminée S1 est alors variable en fonction de la composante verticale Vz du giravion 3 par rapport à l'air environnant. En effet, la première valeur de seuil prédéterminée S1 est alors choisie inférieure ou égale à une première constante d'élévation verticale Sc1 lorsque la composante verticale Vz est supérieure ou égale à une constante de vitesse verticale Vzc. Alternativement, la première valeur de seuil prédéterminée S1 est supérieure à la première constante d'élévation verticale Sc1 lorsque la composante verticale Vz est inférieure à la constante de vitesse verticale Vzc.

Par ailleurs, l'étape de gestion 29 peut aussi commander la consigne de commande de la vitesse NR selon la troisième loi de commande NR3 distincte de la première loi de commande NR1 lorsque d'une part la composante verticale Vz est supérieure ou égale à la constante de vitesse verticale Vzc et d'autre part la élévation verticale z est supérieure à la première valeur de seuil prédéterminée S1.

Une telle troisième loi de commande NR3 peut alors consister en une loi intermédiaire entre la première loi de commande NR1 privilégiant le niveau sonore du giravion en vol au détriment de ses performances et la deuxième loi de commande NR2 privilégiant au contraire les performances du giravion au détriment de son empreinte acoustique mais étant sans impact sur l'environnement car loin des habitations et des populations.

Cette troisième loi de commande NR3 peut également être confondue en tout ou partie, c'est-à-dire sur certaines plages de valeurs de la vitesse d'avancement V du giravion, avec la deuxième loi de commande NR2.

En outre, l'étape de gestion 29 peut commander également la consigne de la vitesse NR selon la quatrième loi de commande NR4 distincte des première et deuxième lois de commande NR1 et NR2 lorsque d'une part la composante verticale Vz est inférieure à la constante de vitesse verticale Vzc et d'autre part l'élévation verticale z est comprise entre la première valeur de seuil prédéterminée S1 et la seconde valeur de seuil prédéterminée S2.

Telle que représentée à la figure 2, une telle quatrième loi de commande NR4 permet alors d'effectuer la transition progressive entre la deuxième loi de commande NR2 et la première loi de commande NR1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

**Revendications**

1. Dispositif de régulation (1) d'une consigne de commande d'une vitesse de rotation, dite vitesse NR, d'au moins un rotor principal (2) d'un giravion (3), ledit dispositif de régulation (1) équipant un giravion (3) comportant :

   • au moins un organe de mesure (6, 16) pour effectuer des mesures représentatives d'une élévation verticale z, z', z" courante dudit giravion (3) par rapport à un niveau de référence Ref, et
   • des moyens de mesure (4) d'une vitesse de déplacement dudit giravion (3) permettant de mesurer au moins une composante verticale Vz d'une vitesse de déplacement dudit giravion (3) par rapport à l'air environnant ledit giravion (3),

   ledit dispositif de régulation (1) de ladite consigne de commande de ladite vitesse NR comportant des moyens de gestion (10) pour commander automatiquement ladite consigne de commande de la vitesse NR selon au moins deux lois de commande prédéterminées NR1, NR2 distinctes l'une de l'autre, lesdites au moins deux lois de commande prédéterminées NR1, NR2 étant alternativement sélectionnées lors d'une phase de vol en descente dudit giravion (3) au moins en fonction des mesures représentatives de ladite élévation verticale z, z', z" évoluant de façon décroissante, lesdits moyens de gestion (10) étant configurés pour commander la consigne de commande de ladite vitesse NR selon :

   • une première loi de commande NR1 lorsque ladite élévation verticale z, z', z" est inférieure à une première valeur de seuil prédéterminée S1,
   • une deuxième loi de commande NR2 choisie distincte de ladite première loi de commande NR1 lorsque ladite élévation verticale z, z', z" est supérieure à une seconde valeur de seuil prédéterminée S2 supérieure à ladite première valeur de seuil prédéterminée S1,

   **caractérisé en ce que** ladite première valeur de seuil prédéterminée S1 est variable en fonction de ladite composante verticale Vz et telle que :

   • ladite première valeur de seuil prédéterminée S1 est inférieure ou égale à une première constante d'élévation verticale Sc1 lorsque ladite composante verticale Vz est supérieure ou égale à une constante de vitesse verticale Vzc, et
   • ladite première valeur de seuil prédéterminée S1 est supérieure à ladite première constante d'élévation verticale Sc1 lorsque ladite composante verticale Vz est inférieure à ladite constante de vitesse verticale Vzc.

2. Dispositif selon la revendication 1, **caractérisé en ce que** ladite constante de vitesse verticale Vzc est choisie voisine de zéro, ladite première valeur de seuil prédéterminée S1 étant inférieure ou égale à une première constante d'élévation verticale Sc1 lorsque ladite composante verticale Vz est voisine de zéro et ladite première valeur de seuil prédéterminée S1 est supérieure à ladite première constante d'élévation verticale Sc1 lorsque ladite composante verticale Vz est inférieure à - 2,032 mètres/seconde (- 400 pieds/minute).

3. Dispositif selon la revendication 2, **caractérisé en ce que** ladite seconde valeur de seuil prédéterminée S2 est la somme de ladite première valeur de seuil prédéterminée S1 et d'une seconde constante d'élévation verticale Sc2.

4. Dispositif selon l'une quelconque des revendications 1 à 3, **caractérisé en ce que** ladite première constante d'élévation verticale Sc1 est comprise entre 121,92 et 182,88 mètres (400 et 600 pieds) et est préférentiellement égale à 149,962 mètres (492 pieds) par rapport audit niveau de référence Ref.

5. Dispositif selon l'une quelconque des revendications 3 à 4,
**caractérisé en ce que** ladite seconde constante d'élévation verticale Sc2 est comprise entre 91,44 et 152,4 mètres (300 et 500 pieds) et est préférentiellement égale à 121,92 mètres (400 pieds).

6. Dispositif selon l'une quelconque des revendications 1 à 5,
**caractérisé en ce que** lesdits moyens de gestion (10) sont configurés pour commander ladite consigne de commande de ladite vitesse NR selon une troisième loi de commande NR3 distincte de ladite première loi de commande NR1 lorsque d'une part ladite composante verticale Vz est supérieure ou égale à ladite constante de vitesse verticale Vzc et d'autre part ladite élévation verticale z, z', z" est supérieure à ladite première valeur de seuil prédéterminée S1.

7. Dispositif selon la revendication 6,
**caractérisé en ce que** ladite troisième loi de commande NR3 est identique à ladite deuxième loi de commande NR2.

8. Dispositif selon l'une quelconque des revendications 1 à 7,
**caractérisé en ce que** lesdits moyens de gestion (10) sont configurés pour commander ladite consigne de commande de ladite vitesse NR selon une quatrième loi de commande NR4 distincte desdites première et deuxième lois de commande NR1 et NR2 lorsque d'une part ladite composante verticale Vz est inférieure à ladite constante de vitesse verticale Vzc et d'autre part ladite élévation verticale z, z', z" est comprise entre ladite première valeur de seuil prédéterminée S1 et ladite seconde valeur de seuil prédéterminée S2.

9. Dispositif selon la revendication 8,
**caractérisé en ce que** ladite quatrième loi de commande NR4 réalise une transition progressive entre ladite deuxième loi de commande NR2 et ladite première loi de commande NR1.

10. Giravion (3) comportant :

     • au moins un rotor principal (2) entrainé par au moins un moteur (5),
     • au moins un organe de mesure (6, 16) pour effectuer des mesures représentatives d'une élévation verticale z, z', z" courante dudit giravion (3) par rapport à un niveau de référence Ref,
     • des moyens de mesure (4) d'une vitesse de déplacement dudit giravion (3) permettant de mesurer au moins une composante verticale Vz d'une vitesse de déplacement dudit giravion (3) par rapport à l'air environnant ledit giravion (3), et
     • un dispositif de régulation (1) d'une consigne de commande d'une vitesse de rotation, dite vitesse NR, dudit au moins un rotor principal (2) du giravion (3), ledit dispositif de régulation (1) de ladite consigne de commande de ladite vitesse NR comportant des moyens de gestion (10) pour commander automatiquement ladite consigne de commande de ladite vitesse NR selon au moins deux lois de commande prédéterminées NR1, NR2 distinctes l'une de l'autre, lesdites au moins deux lois de commande prédéterminées NR1, NR2 étant alternativement sélectionnées lors d'une phase de vol en descente dudit giravion (3) au moins en fonction des mesures représentatives de ladite élévation verticale z, z', z" évoluant de façon décroissante par rapport audit niveau de référence Ref, lesdits moyens de gestion (10) étant configurés pour commander ladite consigne de commande de ladite vitesse NR selon :

     - une première loi de commande NR1 lorsque ladite élévation verticale z, z', z" est inférieure à une première valeur de seuil prédéterminée S1,
     - une deuxième loi de commande NR2 choisie distincte de ladite première loi de commande NR1 lorsque ladite élévation verticale z, z', z" est supérieure à une seconde valeur de seuil prédéterminée S2 supérieure à ladite première valeur de seuil prédéterminée S1,

**caractérisé en ce que** ledit giravion (3) comporte un dispositif de régulation (1) de ladite consigne de commande de ladite vitesse NR selon l'une quelconque des revendications 1 à 9.

11. Giravion selon la revendication 10,
**caractérisé en ce que** ledit au moins un organe de mesure (6, 16) comporte :

     • un premier altimètre (6) dit "altimètre barométrique" permettant d'effectuer une mesure d'une pression atmosphérique et de comparer ladite mesure de ladite pression atmosphérique avec une pression atmosphérique de référence pour déterminer une altitude barométrique z' dudit giravion (3) à laquelle est effectuée ladite mesure de ladite pression atmosphérique, et
     • un second altimètre (16) dit "radioaltimètre" permettant d'effectuer une mesure d'une hauteur radiosonde z" du giravion (3) par rapport au sol en émettant une onde destinée à être réfléchie par le sol et en mesurant le temps nécessaire à cette onde pour parcourir une distance aller-retour séparant ledit giravion (3) du sol, et

**en ce que** ledit giravion (3) comporte des moyens de calcul (8) pour calculer une élévation verticale z, dite "radio-hybridée", à partir d'un filtrage de ladite altitude barométrique z' et de ladite hauteur radiosonde z".

12. Méthode de régulation (20) d'une consigne de commande d'une vitesse de rotation, dite vitesse NR, d'au moins un rotor principal (2) d'un giravion (3), ladite méthode (20) comportant au moins les étapes consistant en :

    • une première étape de mesure (26) pour effectuer des mesures représentatives d'une élévation verticale z, z', z" courante dudit giravion (3) par rapport à un niveau de référence Ref,
    • une deuxième étape de mesure (28) pour mesurer au moins une composante verticale Vz d'une vitesse de déplacement dudit giravion (3) par rapport à l'air environnant ledit giravion (3), et
    • une étape de gestion (29) pour commander automatiquement ladite consigne de commande de ladite vitesse NR selon au moins deux lois de commande prédéterminées NR1, NR2 distinctes l'une de l'autre, lesdites au moins deux lois de commande prédéterminées NR1, NR2 étant alternativement sélectionnées lors d'une phase de vol en descente dudit giravion (3) au moins en fonction des mesures représentatives de ladite élévation verticale z, z', z" évoluant de façon décroissante, ladite étape de gestion (29) permettant de commander ladite consigne de commande de ladite vitesse NR selon :

        - une première loi de commande NR1 lorsque ladite élévation verticale z, z', z" est inférieure à une première valeur de seuil prédéterminée S1,
        - une deuxième loi de commande NR2 choisie distincte de ladite première loi de commande NR1 lorsque ladite élévation verticale z, z', z" est supérieure à une seconde valeur de seuil prédéterminée S2 supérieure à ladite première valeur de seuil prédéterminée S1,

**caractérisée en ce que** ladite première valeur de seuil prédéterminée S1 est variable en fonction de ladite composante verticale Vz et telle que :

    • ladite première valeur de seuil prédéterminée S1 est inférieure ou égale à une première constante d'élévation verticale Sc1 lorsque ladite composante verticale Vz est supérieure ou égale à une constante de vitesse verticale Vzc, et
    • ladite première valeur de seuil prédéterminée S1 est supérieure à ladite première constante d'élévation verticale Sc1 lorsque ladite composante verticale Vz est inférieure à ladite constante de vitesse verticale Vzc.

13. Méthode selon la revendication 12,
**caractérisée en ce que** ladite étape de gestion (29) commande ladite consigne de commande de ladite vitesse NR selon une troisième loi de commande NR3 distincte de ladite première loi de commande NR1 lorsque d'une part ladite composante verticale Vz est supérieure ou égale à ladite constante de vitesse verticale Vzc et d'autre part ladite élévation verticale z, z', z" est supérieure à ladite première valeur de seuil prédéterminée S1.

14. Méthode selon l'une quelconque des revendications 12 à 13,
**caractérisée en ce que** ladite étape de gestion (29) commande ladite consigne de ladite vitesse NR selon une quatrième loi de commande NR4 distincte desdites première et deuxième lois de commande NR1 et NR2 lorsque d'une part ladite composante verticale Vz est inférieure à ladite constante de vitesse verticale Vzc et d'autre part ladite élévation verticale z, z', z" est comprise entre ladite première valeur de seuil prédéterminée S1 et ladite seconde valeur de seuil prédéterminée S2.

**Patentansprüche**

1. Vorrichtung (1) zum Regeln eines Steuersollwerts einer Drehgeschwindigkeit, als Geschwindigkeit NR bezeichnet, mindestens eines Hauptrotors (2) eines Drehflüglers (3), wobei die Regelvorrichtung (1) einen Drehflügler (3) ausstattet, umfassend:

    - mindestens ein Messelement (6, 16) zum Durchführen von Messungen, die eine aktuelle vertikale Höhe z, z', z" des Drehflüglers (3) in Bezug auf ein Referenzniveau Ref angeben, und
    - Mittel (4) zum Messen einer Bewegungsgeschwindigkeit des Drehflüglers (3), die es ermöglichen, mindestens eine vertikale Komponente Vz einer Bewegungsgeschwindigkeit des Drehflüglers (3) in Bezug auf die den Drehflügler (3) umgebende Luft zu messen,
    wobei die Regelvorrichtung (1) zum Regeln des Steuersollwerts für die Geschwindigkeit NR eine Verwaltungseinrichtung (10) zum automatischen Steuern des Steuersollwerts der Geschwindigkeit NR anhand von mindestens zwei vorgegebenen, sich voneinander unterscheidenden Steuerregeln NR1, NR2 umfasst, wobei während einer Sinkflugphase des Drehflüglers (3) die mindestens zwei vorgegebenen Steuerregeln NR1, NR2 wenigstens anhand von Messwerten, die die vertikale Elevation z, z', z" angeben und sich in abnehmender Weise entwickeln, abwechselnd ausgewählt werden, wobei die Verwaltungseinrichtung (10) konfiguriert ist, um den Steuersollwert der Drehgeschwindigkeit NR:

- anhand einer ersten Steuerregel NR1 zu steuern, wenn die vertikale Elevation z, z', z" kleiner als ein erster vorgegebener Schwellenwert S1 ist,
- anhand einer zweiten Steuerregel NR2, die von der ersten Steuerregel NR1 verschieden gewählt ist, zu steuern, wenn die vertikale Elevation z, z', z" größer als ein zweiter vorgegebener Schwellenwert S2 ist, der größer als der erste vorgegebene Schwellenwert S1 ist,

**dadurch gekennzeichnet, dass** der erste vorgegebene Schwellenwert S1 in Abhängigkeit von der vertikalen Komponente Vz variabel ist und zwar so, dass:

- der erste vorgegebene Schwellenwert S1 kleiner oder gleich einer ersten vertikalen Elevationskonstante Sc1 ist, wenn die vertikale Komponente Vz größer oder gleich einer Vertikalgeschwindigkeitskonstante Vzc ist, und
- der erste vorgegebene Schwellenwert S1 größer ist als die erste vertikale Elevationskonstante Sc1, wenn die vertikale Komponente Vz kleiner ist als die vertikale Geschwindigkeitskonstante Vzc.

2. Vorrichtung nach Anspruch 1,
**dadurch gekennzeichnet, dass** die vertikale Geschwindigkeitskonstante Vzc nahe Null ausgewählt ist, wobei der erste vorgegebene Schwellenwert S1 kleiner oder gleich einer ersten vertikalen Elevationskonstante Sc1 ist, wenn die vertikale Komponente Vz nahe Null ist, und der erste vorgegebene Schwellenwert S1 größer als die erste vertikale Elevationskonstante Sc1 ist, wenn die vertikale Komponente Vz unter -2,032 Meter/Sekunde (-400 Fuß/Minute) liegt.

3. Vorrichtung nach Anspruch 2,
**dadurch gekennzeichnet, dass** der zweite vorgegebene Schwellenwert S2 die Summe aus dem ersten vorgegebenen Schwellenwert S1 und einer zweiten vertikalen Elevationskonstante Sc2 ist.

4. Vorrichtung nach einem der Ansprüche 1 bis 3,
**dadurch gekennzeichnet, dass** die erste vertikale Elevationskonstante Sc1 zwischen 121,92 und 182,88 Metern (400 und 600 Fuß) und vorzugsweise bei 149,962 Metern (492 Fuß) in Bezug auf das Referenzniveau Ref liegt .

5. Vorrichtung nach einem der Ansprüche 3 bis 4,
**dadurch gekennzeichnet, dass** die zweite vertikale Elevationskonstante Sc2 zwischen 91,44 und 152,4 Metern (300 und 500 Fuß) liegt und vorzugsweise gleich 121,92 Metern (400 Fuß) ist.

6. Vorrichtung nach einem der Ansprüche 1 bis 5,
**dadurch gekennzeichnet, dass** die Verwaltungseinrichtung (10) konfiguriert ist, um den Steuersollwert der Geschwindigkeit NR gemäß einer sich von der ersten Steuerregel NR1 unterscheiden dritten Steuerregel NR3 zu steuern, wenn einerseits die vertikale Komponente Vz größer oder gleich der vertikalen Geschwindigkeitskonstante Vzc ist und andererseits die vertikale Elevation z, z', z" größer als der erste vorgegebene Schwellenwert S1 ist.

7. Vorrichtung nach Anspruch 6,
**dadurch gekennzeichnet, dass** die dritte Steuerregel NR3 identisch mit der zweiten Steuerregel NR2 ist.

8. Vorrichtung nach einem der Ansprüche 1 bis 7,
**dadurch gekennzeichnet, dass** die Steuereinrichtung (10) konfiguriert ist, um den Steuersollwert der Geschwindigkeit NR anhand einer vierten Steuerregel NR4 zu steuern, die sich von der ersten und der zweiten Steuerregel NR1 und NR2 unterscheidet, wenn einerseits die vertikale Komponente Vz niedriger ist als die vertikale Geschwindigkeitskonstante Vzc und andererseits die vertikale Elevation z, z', z" zwischen dem ersten vorgegebenen Schwellenwert S1 und dem zweiten vorgegebenen Schwellenwert S2 liegt.

9. Vorrichtung nach Anspruch 8,
**dadurch gekennzeichnet, dass** die vierte Steuerregel NR4 einen progressiven Übergang zwischen der zweiten Steuerregel NR2 und der ersten Steuerregel NR1 bildet.

10. Drehflügler (3), umfassend:

- mindestens einen Hauptrotor (2), der von mindestens einem Motor (5) angetrieben ist,
- mindestens ein Messelement (6, 16) zum Durchführen von Messungen, die repräsentativ sind für eine aktuelle vertikale Elevation z, z', z" des Drehflüglers (3) in Bezug auf ein Referenzniveau Ref,
Mittel (4) zum Messen einer Bewegungsgeschwindigkeit des Drehflüglers (3), die es ermöglichen, mindestens eine vertikale Komponente Vz einer Bewegungsgeschwindigkeit des Drehflüglers (3) in Bezug auf die den Drehflügler (3) umgebende Luft zu messen, und

- eine Vorrichtung (1) zum Regeln eines Steuersollwerts einer Drehgeschwindigkeit, als Geschwindigkeit NR bezeichnet, des mindestens einen Hauptrotors (2) des Drehflüglers (3), wobei die Vorrichtung (1) zum Regeln des Steuersollwerts der Drehgeschwindigkeit NR eine Verwaltungseinrichtung (10) zum automatischen Steuern des Steuersollwerts der Drehgeschwindigkeit NR anhand von mindestens zwei vorgegebenen, sich voneinander unterscheidenden Steuerregeln NR1, NR2 umfasst, wobei die mindestens zwei vorgegebenen Steuerregeln NR1, NR2 während einer Sinkflugphase des Drehflüglers (3) wenigstens anhand von Messwerten, die die vertikale Elevation z, z', z" angeben und sich in Bezug auf das Referenzniveau in abnehmender Weise entwickeln, abwechselnd ausgewählt werden, wobei die Verwaltungseinrichtung (10) konfiguriert ist, um den Steuersollwert der Geschwindigkeit NR:

- anhand einer ersten Steuerregel NR1 zu steuern, wenn die vertikale Elevation z, z', z" kleiner als ein erster vorgegebener Schwellenwert S1 ist,
- anhand einer zweiten Steuerregel NR2, die von der ersten Steuerregel NR1 verschieden gewählt ist, zu steuern, wenn die vertikale Elevation z, z', z" größer als ein zweiter vorgegebener Schwellenwert S2 ist, der größer als der erste vorgegebene Schwellenwert S1 ist,
**dadurch gekennzeichnet, dass** der Drehflügler (3) eine Vorrichtung (1) zum Regeln des Steuersollwerts für die Geschwindigkeit NR nach einem der Ansprüche 1 bis 9 umfasst.

11. Drehflügler nach Anspruch 10,
**dadurch gekennzeichnet, dass** das mindestens eine Messelement (6, 16) umfasst:

einen ersten Höhenmesser (6), als "barometrischer Höhenmesser" bezeichnet, zum Messen eines Luftdrucks und zum Vergleichen des Messwertes des Luftdrucks mit einem Referenz-Luftdruck, um eine barometrische Höhe z' des Drehflüglers (3) zu bestimmen, auf der die Messung des Luftdrucks durchgeführt wird, und einen zweiten Höhenmesser (16), als "Funkhöhenmesser" bezeichnet, zum Messen einer Funksondenhöhe z" des Drehflüglers (3) in Bezug auf den Boden durch Ausstrahlen einer Welle, die dazu bestimmt ist, vom Boden reflektiert zu werden, und Messen der Zeit, die diese Welle benötigt, um einen Weg vom Drehflügler (3) zum Boden und zurück zurückzulegen, und
dass der Drehflügler (3) eine Recheneinrichtung (8) zum Berechnen einer als "funkhybridisiert" bezeichneten vertikalen Elevation z aus einer Filterung der barometrischen Höhe z' und der Funksondenhöhe z" umfasst.

12. Verfahren zum Regeln (20) eines Steuersollwerts einer Drehgeschwindigkeit, als Geschwindigkeit NR bezeichnet, mindestens eines Hauptrotors (2) eines Drehflüglers (3), wobei das Verfahren (20) mindestens die folgenden Schritte umfasst:

- einen ersten Messschritt (26) zum Durchführen von Messungen, die eine aktuelle vertikale Höhe z, z', z', z" des Drehflüglers (3) in Bezug auf ein Referenzniveau Ref angeben,
- einen zweiten Messschritt (28) zum Messen mindestens einer vertikalen Komponente Vz einer Bewegungsgeschwindigkeit des Drehflüglers (3) in Bezug auf die den Drehflügler (3) umgebende Luft, und
- einen Verwaltungsschritt (29) zum automatischen Steuern des Steuersollwerts der Geschwindigkeit NR anhand von mindestens zwei vorgegebenen, sich voneinander unterscheidenden Steuerregeln NR1, NR2, wobei während einer Sinkflugphase des Drehflüglers (3) die mindestens zwei vorgegebenen Steuerregeln NR1, NR2 anhand der Messwerte, die die vertikale Elevation z, z', z" angeben und sich in abnehmender Weise entwickeln, abwechselnd ausgewählt werden, wobei der Verwaltungsschritt (29) es erlaubt, den Steuersollwert für die Geschwindigkeit NR:

- anhand einer ersten Steuerregel NR1 zu steuern, wenn die vertikale Elevation z, z', z" kleiner als ein erster vorgegebener Schwellenwert S1 ist,
- anhand einer zweiten Steuerregel NR2, die von der ersten Steuerregel NR1 verschieden gewählt ist, zu steuern, wenn die vertikale Elevation z, z', z" größer als ein zweiter vorgegebener Schwellenwert S2 ist, der größer als der erste vorgegebene Schwellenwert S1 ist,
**dadurch gekennzeichnet, dass** der erste vorgegebene Schwellenwert S1 in Abhängigkeit von der vertikalen Komponente Vz variabel ist und zwar so, dass:

- der erste vorgegebene Schwellenwert S1 kleiner oder gleich einer ersten vertikalen Elevationskonstante Sc1 ist, wenn die vertikale Komponente Vz größer oder gleich einer Vertikalgeschwindigkeitskonstante Vzc ist, und

- der erste vorgegebene Schwellenwert S1 größer ist als die erste vertikale Elevationskonstante Sc1, wenn die vertikale Komponente Vz kleiner ist als die vertikale Geschwindigkeitskonstante Vzc.

13. Verfahren nach Anspruch 12, **dadurch gekennzeichnet, dass** der Verwaltungsschritt (29) den Steuersollwert der Geschwindigkeit NR gemäß einer dritten Steuerregel NR3 steuert, die sich von der ersten Steuerregel NR1 unterscheidet, wenn einerseits die vertikale Komponente Vz größer oder gleich der vertikalen Geschwindigkeitskonstante Vzc ist und andererseits die vertikale Elevation z, z', z" größer als der erste vorgegebene Schwellenwert S1 ist.

14. Verfahren nach einem der Ansprüche 12 bis 13, **dadurch gekennzeichnet, dass** der Verwaltungsschritt (29) den Sollwert der Geschwindigkeit NR anhand einer vierten Steuerregel NR4 steuert, die sich von der ersten und der zweiten Steuerregel NR1 und NR2 unterscheidet, wenn einerseits die vertikale Komponente Vz niedriger als die vertikale Geschwindigkeitskonstante Vzc ist und andererseits die vertikale Elevation z, z', z" zwischen dem ersten vorgegebenen Schwellenwert S1 und dem zweiten vorgegebenen Schwellenwert S2 liegt.

**Claims**

1. Device (1) for adjusting a control setpoint for a rotational speed, referred to as the NR speed, of at least one main rotor (2) of a rotorcraft (3), said adjustment device (1) with which a rotorcraft (3) is provided comprising:

   • at least one measuring element (6, 16) for taking measurements representative of a current vertical elevation z, z', z" of said rotorcraft (3) relative to a reference level Ref, and
   • means (4) for measuring a travelling speed of said rotorcraft (3) which make it possible to measure at least one vertical component Vz of a travelling speed of said rotorcraft (3) relative to the air surrounding said rotorcraft (3),
   said device (1) for adjusting said control setpoint for said NR speed comprising management means (10) for automatically controlling said control setpoint for the NR speed according to at least two predetermined control laws NR1, NR2 that are different from one another, said at least two predetermined control laws NR1, NR2 being alternately selected during a descending flight phase of said rotorcraft (3) at least on the basis of the measurements representative of said decreasing vertical elevation z, z', z", said management means (10) being configured to control the control setpoint for said NR speed according to:

   • a first control law NR1 when said vertical elevation z, z', z" is less than a first predetermined threshold value S1,
   • a second control law NR2 selected so as to be different from said first control law NR1 when said vertical elevation z, z', z" is greater than a second predetermined threshold value S2 which is greater than said first predetermined threshold value S1,
   **characterised in that** said first predetermined threshold value S1 is variable according to said vertical component Vz and such that:

   • said first predetermined threshold value S1 is less than or equal to a first vertical elevation constant Sc1 when said vertical component Vz is greater than or equal to a vertical speed constant Vzc, and
   • said first predetermined threshold value S1 is greater than said first vertical elevation constant Sc1 when said vertical component Vz is less than said vertical speed constant Vzc.

2. Device according to claim 1, **characterised in that** the vertical speed constant Vzc is selected so as to be close to zero, the first predetermined threshold value S1 being less than or equal to a first vertical elevation constant Sc1 when the vertical component Vz is close to zero, and the first predetermined threshold value S1 being greater than the first vertical elevation constant Sc1 when the vertical component Vz is less than - 2.032 metres/second (-400 feet/minute).

3. Device according to claim 2, **characterised in that** the second predetermined threshold value S2 is the sum of the first predetermined threshold value S1 and a second vertical elevation constant Sc2.

4. Device according to any of claims 1 to 3, **characterised in that** the first vertical elevation constant Sc1 is between 121.92 and 182.88 metres (400 and 600 feet) and is preferably equal to 149.962 metres (492 feet) relative to the reference level Ref.

5. Device according to either claim 3 or claim 4, **characterised in that** the second vertical elevation constant Sc2 is between 91.44 and 152.4 metres (300 and 500 feet) and is preferably equal to 121.92 metres (400 feet).

6. Device according to any of claims 1 to 5, **characterised in that** the management means (10) are configured to control the control setpoint for the NR speed according to a third control law NR3 that is different from the first control law NR1 when the vertical component Vz is greater than or equal to the vertical speed constant Vzc and when the vertical elevation z, z', z" is greater than the first predetermined threshold value S1.

7. Device according to claim 6, **characterised in that** the third control law NR3 is identical to the second control law NR2.

8. Device according to any of claims 1 to 7, **characterised in that** the management means (10) are configured to control the control setpoint for the NR speed according to a fourth control law NR4 that is different from the first and second control laws NR1 and NR2 when the vertical component Vz is less than the vertical speed constant Vzc and when the vertical elevation z, z', z" is between the first predetermined threshold value S1 and the second predetermined threshold value S2.

9. Device according to claim 8, **characterised in that** the fourth control law NR4 makes a gradual transition between the second control law NR2 and the first control law NR1.

10. Rotorcraft (3) comprising:

   • at least one main rotor (2) driven by at least one motor (5),
   • at least one measuring element (6, 16) for taking measurements representative of a current vertical elevation z, z', z" of said rotorcraft (3) relative to a reference level Ref,
   • means (4) for measuring a travelling speed of said rotorcraft (3) which make it possible to measure at least one vertical component Vz of a travelling speed of said rotorcraft (3) relative to the air surrounding said rotorcraft (3), and
   • a device (1) for adjusting a control setpoint for a rotational speed, referred to as the NR speed, of said at least one main rotor (2) of the rotorcraft (3), said device (1) for adjusting said control setpoint for said NR speed comprising management means (10) for automatically controlling said control setpoint for the NR speed according to at least two predetermined control laws NR1, NR2 that are different from one another, said at least two predetermined control laws NR1, NR2 being alternately selected during a descending flight phase of said rotorcraft (3) at least on the basis of the measurements representative of said decreasing vertical elevation z, z', z" relative to said reference level Ref, said management means (10) being configured to control said control setpoint for said NR speed according to:

   - a first control law NR1 when said vertical elevation z, z', z" is less than a first predetermined threshold value S1,
   - a second control law NR2 selected so as to be different from said first control law NR1 when said vertical elevation z, z', z" is greater than a second predetermined threshold value S2 which is greater than said first predetermined threshold value S1,

   **characterised in that** said rotorcraft (3) comprises a device (1) for adjusting said control setpoint for said NR speed according to any of claims 1 to 9.

11. Rotorcraft according to claim 10, **characterised in that** the at least one measuring element (6, 16) comprises:

   • a first altimeter (6), referred to as a "barometric altimeter", for taking a measurement of atmospheric pressure and comparing said measurement of atmospheric pressure with a reference atmospheric pressure so as to determine a barometric altitude z' of said rotorcraft (3) at which said measurement of atmospheric pressure is taken, and
   • a second altimeter (16), referred to as a "radio altimeter", for taking a measurement of radio height z" of the rotorcraft (3) relative to the ground by emitting a wave intended to be reflected by the ground and measuring the time required for this wave to travel a return distance separating said rotorcraft (3) from the ground, and

   **in that** said rotorcraft (3) comprises calculation means (8) for calculating a vertical elevation z, referred to as a "radio-hybrid" elevation, by filtering said barometric altitude z' and said radio height z".

12. Method (20) for adjusting a control setpoint for a rotational speed, referred to as the NR speed, of at least one main rotor (2) of a rotorcraft (3), said method (20) comprising at least the following steps:

   • a first measurement step (26) for taking measurements representative of a current vertical elevation z, z', z" of said rotorcraft (3) relative to a reference level Ref,

• a second measurement step (28) for measuring at least one vertical component Vz of a travelling speed of said rotorcraft (3) relative to the air surrounding said rotorcraft (3), and

• a management step (29) for automatically controlling said control setpoint for said NR speed according to at least two predetermined control laws NR1, NR2 that are different from one another, said at least two predetermined control laws NR1, NR2 being alternately selected during a descending flight phase of said rotorcraft (3) at least on the basis of the measurements representative of said decreasing vertical elevation z, z', z", said management step (29) making it possible to control said control setpoint for said NR speed according to:

- a first control law NR1 when said vertical elevation z, z', z" is less than a first predetermined threshold value S1,
- a second control law NR2 selected so as to be different from said first control law NR1 when said vertical elevation z, z', z" is greater than a second predetermined threshold value S2 which is greater than said first predetermined threshold value S1, **characterised in that** said first predetermined threshold value S1 is variable according to said vertical component Vz and such that:

• said first predetermined threshold value S1 is less than or equal to a first vertical elevation constant Sc1 when said vertical component Vz is greater than or equal to a vertical speed constant Vzc, and

• said first predetermined threshold value S1 is greater than said first vertical elevation constant Sc1 when said vertical component Vz is less than said vertical speed constant Vzc.

13. Method according to claim 12, **characterised in that** the management step (29) controls the control setpoint for the NR speed according to a third control law NR3 that is different from the first control law NR1 when the vertical component Vz is greater than or equal to the vertical speed constant Vzc and when the vertical elevation z, z', z" is greater than the first predetermined threshold value S1.

14. Method according to either claim 12 or claim 13, **characterised in that** the management step (29) controls the setpoint for the NR speed according to a fourth control law NR4 that is different from the first and second control laws NR1 and NR2 when the vertical component Vz is less than the vertical speed constant Vzc and when the vertical elevation z, z', z" is between the first predetermined threshold value S1 and the second predetermined threshold value S2.

# Fig.1

Fig.2

Fig.3

# Fig.4

# Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6198991 B, YAMAKAWA
- US 2007118254 A, BARNES G.W.
- WO 2010143051 A, AGUSTA SPA
- FR 3000465
- FR 3000466
- FR 3002803
- JP H0539094 B
- EP 0945841 A
- FR 2974564
- GB 2192163 A
- FR 2981045

**Littérature non-brevet citée dans la description**

- **C.G. SCHAEFER JR ; F.H. LUTZE, JR.** Enhanced energy maneuverability for attack helicopters using continuous variable rotor speed control. *47th forum American Helicopter Society,* 1991, 1293-1303